Europäisches Patentamt

European Patent Office

Office européen des brevets

(11) Veröffentlichungsnummer: **0 372 204**
**A2**

## (12) EUROPÄISCHE PATENTANMELDUNG

(21) Anmeldenummer: **89119585.1**

(22) Anmeldetag: **21.10.89**

(51) Int. Cl.5: **G01S 17/02, G01S 17/88**

(30) Priorität: **02.12.88 DE 3840677**

(43) Veröffentlichungstag der Anmeldung:
**13.06.90 Patentblatt 90/24**

(84) Benannte Vertragsstaaten:
**AT BE CH DE ES FR GB GR IT LI NL SE**

(71) Anmelder: **KRUPP ATLAS ELEKTRONIK GMBH**
**Postfach 44 85 45 Sebaldsbrücker**
**Heerstrasse 235**
**D-2800 Bremen 44(DE)**

(72) Erfinder: **Burggraf, Hubert, Dipl.-Phys., Dr. Ing.**
**Hoher Acker 6**
**D-2806 Oyten-Bassen(DE)**
Erfinder: **Rathjen, Dirk, Dipl.-Phys., Dr. rer.**
**nat.**
**Am Rüten 68**
**D-2800 Bremen 33(DE)**

(54) **Optischer Überwachungssensor.**

(57) Es wird ein berührungslos arbeitender schneller optischer Überwachungssensor zum Detektieren von in eine vorgegebene Schutzzone eindringenden Objekten vorgeschlagen. Der Überwachungssensor weist einen optischen Sender und einen optischen Empfänger auf. Der Sender sendet einen eindimensional aufgespreizten Sendestrahl aus, der eine die Schutzzone überdeckende Lichtfläche erzeugt. Der Empfänger weist einen die Schutzzone aus der Lichtfläche ausgrenzenden räumlichen Auffaßbereich und einen Lichtdetektor auf, der bei Empfang von Licht ein Warn-oder Steuersignal auslöst.

Fig. 1

EP 0 372 204 A2

# Optischer Überwachungssensor

Die Erfindung betrifft einen optischen Überwachungssensor zum Detektieren von in eine vorgegebene Schutzzone eindringenden Objekten der im Oberbegriff des Anspruchs 1 definierten Gattung.

Die Detektion eines für ein mobiles Gerät ein Hindernis darstellenden Objektes im Nahbereich vor dem mobilen Gerät kann mechanisch, akustisch oder optisch erfolgen. Sog. mechanische Kollisionssensoren, z.B. Sicherheitsbügel, Drahtfühler od. dgl., arbeiten berührend. Sie sind für hohe Geschwindigkeiten des mobilen Gerätes wenig geeignet. Berührungslos arbeitende Kollisionssensoren hingegen arbeiten auch noch bei höheren Geschwindigkeiten zufriedenstellend. Ihnen liegt das Prinzip der Abstandsmessung zwischen dem mobilen Gerät oder Fahrzeug und dem Hindernis zugrunde. Wird dabei eine vorgegebene Mindestdistanz unterschritten, so wird ein Warnsignal ausgegeben und/oder ein Steuervorgang zum Bremsen des mobilen Gerätes ausgelöst. Akustische Dopplersensoren haben dabei mit Dopplerverschiebungen und Vielfachechos verbundene Probleme zu berücksichtigen und benötigen deswegen eine umfangreiche Elektronik zur Auswertung der Nahfeldsignale. Optische Sensoren arbeiten vielfach nach dem Prinzip der Laufzeitmessung. Um jedoch bei nicht spurgebundenen, mobilen Geräten oder Fahrzeugen den Raum vor diesen zu überwachen, ist ein Scannen des Sendestrahls horizontal und vertikal zur Fahrtrichtung erforderlich. Das Scannen und die Auswertung der Scansignale dauern jedoch für eine Nahfeldüberwachung zu lange, abgesehen von dem erforderlichen hohen elektronischen Aufwand. Stationäre optische Überwachungssensoren, sog. Lichtschranken, haben eine geringe räumliche Ausdehnung und können nur solche Objekte detektieren, die aufgrund ihrer Bewegungsbahn die Lichtschranke queren. Das Aufspannen flächenhafter Schutzzonen mit einer Vielzahl von Lichtschranken ist technisch aufwendig und für viele Anwendungsfälle aus Kostengründen nicht tragbar.

Der Erfindung liegt die Aufgabe zugrunde, einen berührungslos arbeitenden schnellen Überwachungssensor der eingangs genannten Art zu schaffen, der in eine definierte großflächige Sicherheitszone eindringende Objekte zuverlässig detektiert und der sich durch wenige kommerzielle optische Komponenten und eine einfache Auswerteelektronik auszeichnet, so daß er preisgünstig herstellbar ist.

Die Aufgabe ist bei einem Überwachungssensor der im Oberbegriff des Anspruchs 1 definierten Gattung erfindungsgemäß durch die Merkmale im Kennzeichenteil des Anspruchs 1 gelöst.

Der erfindungsgemäße Überwachungssensor hat den Vorteil, daß der mit einfachen Mitteln aufgeweitete Lichtstrahl eine Lichtfläche erzeugt, die die Schutzzone überstreicht, und der optische Empfänger mit seinem räumlichen Empfangswinkel aus dieser Lichtfläche die Schutzzone ausgrenzt. Ein in die Schutzzone eindringendes Objekt wird beleuchtet und streut Licht in den Empfänger, das erfaßt wird. Das Ausgangssignal des Lichtdetektors löst beispielsweise ein Warnsignal aus, das die Anwesenheit eines Objektes in der Schutzzone kenntlich macht. Auf diese Weise werden alle Raumpunkte in der Schutzzone parallel überwacht und das Eindringen des Objektes an einer beliebigen Stelle der Schutzzone sehr schnell erkannt. Die Reaktionszeit des Überwachungssensors ist sehr klein und allein durch die Zeitkonstante des Lichtdetektors - und ggf. der nachgeschalteten Elektronik - vorgegeben, die typenabhängig ist und kleiner als 1 ms gehalten werden kann.

Die Schutz- oder Sicherheitszone kann leicht den Erfordernissen angepaßt werden. So ist es z.B. durch Einsatz spezieller Optiken im Sender möglich, der Schutzzone eine beliebige Formgebung zu verleihen, so z.B. eine gekrümmte. Auch können durch Einsatz mehrerer optischer Sender und Empfänger mehrere Sicherheitszonen aufgebaut werden, wodurch sich der Sicherheitsbereich vergrößern läßt.

Bei dem erfindungsgemäßen Überwachungssensor werden kommerzielle optische Komponenten, wie Lasersender, Zylinderoptik, Empfangsoptik, Lichtdetektor verwendet, die preisgünstig sind und niedrige Fertigungskosten ermöglichen. Der Überwachungssensor ist sowohl stationär einsetzbar, z.B. zum Arbeitsschutz an Maschinen und Fertigungsautomaten, als auch als sog. Kollisionssensor bei mobilen Geräten zu verwenden, wo er den Raum in Vorausrichtung des fahrenden Geräts auf mögliche Hindernisse in der Fahrbahn, also auf Hindernisse auf oder oberhalb und/oder in der Fahrbahndecke, wie Löcher, überwacht.

Vorteilhafte Ausführungsformen des Überwachungssensors mit zweckmäßigen Weiterbildungen und Ergänzungen der Erfindung ergeben sich aus den weiteren Ansprüchen.

Der Sendestrahl wird vorzugsweise von einem Lasersender erzeugt. Zur Realisierung der in Senderichtung sich flächenhaft erstreckenden Lichtzone wird das Laserlicht in Horizontalrichtung mittels einer Zylinderoptik aufgespreizt. Zur Fremdlichtunterdrückung wird das Licht moduliert oder dem Empfänger ein geeignetes optisches Filter vorgesetzt, so daß nur das Streulicht mit der Frequenz des monochromatischen Laserlichts empfangen werden kann.

Als Lichtdetektor werden flächenhafte oder linienhafte Fotodioden eingesetzt.

Wird als Lichtdetektor eine positionsempfindliche Diode verwendet, so kann zusätzlich der Ort des Schwerpunktes der auf den Lichtdetektor fallenden Lichtverteilung bei Beleuchtung eines in die Schutzzone eindringenden Objektes ermittelt werden. Damit kann man eine zusätzliche Information über die Position des Objektes innerhalb der Schutzzone erlangen. Besteht hingegen der Lichtdetektor aus einem flächenhaften Array aus einer Vielzahl von Fotoempfängern, so können mehrere gleichzeitig in die Schutzzone eindringende Hindernisse getrennt detektiert werden.

Eine bevorzugte Anwendung des erfindungsgemäßen Überwachungssensors wird bei mobilen Geräten, wie Roboter, spurgebundenen und spurungebundenen Fahrzeugen oder sonstigen leitdrahtlosen Transportmitteln, z.B. in Werkhallen, gesehen. Hier wird zur Vermeidung von Kollisionen mit in der Fahrbahn befindlichen Hindernissen von Sender und Empfänger eine mit dem mobilen Gerät sich vorschiebende Schutzzone in Vorausrichtung aufgespannt, die vorzugsweise zur Fahrbahndecke hin geneigt ist. Damit werden alle Hindernisse bis zu einer bestimmten Höhe oberhalb der Fahrbahndecke erkannt. Die Größe und Lage der Schutzzone kann durch Ausrichten von Sender und Empfänger, die im Abstand voneinander angeordnet sind, wobei je nach Ausbildung der Sender- und/oder Empfangsoptik der Sender jede beliebige Lage zum Empfänger, auch eine vertikale oder horizontale, haben kann, problemlos verändert und den Bedürfnissen des mobilen Gerätes angepaßt werden.

Die Neigung der Schutzzone hin zur Fahrbahndecke wird durch eine entsprechende Einstellung der optischen Achse des Senders realisiert, so daß die von dem eindimensional aufgespreizten Sendestrahl erzeugte Lichtfläche die Schutzzone überstreicht und auf der Fahrbahndecke eine Lichtlinie projiziert, die bei ebener Lichtfläche eine Gerade bzw. ein Strich ist. Da die Fahrbahndecke selbst kein Hindernis ist, muß die Beleuchtung des Lichtdetektors durch die projizierte Lichtlinie unterdrückt werden. Dies kann einmal dadurch geschehen, daß die optische Achse des Empfängers so gelegt wird, daß die Lichtlinie gerade nicht mehr im Auffaßbereich des Empfängers, also gerade außerhalb der Schutzzone, liegt. Dies kann aber auch nach einer bevorzugten Ausführungsform der Erfindung dadurch erfolgen, daß die Lichtlinie zwar in der Schutzzone verbleibt, letztere also die Fahrbahndecke durchstoßend bis zu einem bestimmten Maß unterhalb der Fahrbahndecke reicht, aber der Lichtdetektor in der Bildebene der Empfangsoptik im Empfänger mit Abstand von der in der Bildebene von der Empfangsoptik entworfenen Abbildung der Lichtlinie angeordnet ist. Dies hat den Vorteil, daß durch die Schutzzone auch Hindernisse in der Fahrbahndecke, wie Löcher und Vertiefungen, erfaßt werden. Sollen nur Hindernisse oberhalb der Fahrbahndecke detektiert werden, so ist der Lichtdetektor mit seiner lichtempfindlichen Fläche auf der einen Seite der Lichtlinienabbildung anzubringen. Sollen Hindernisse sowohl oberhalb als auch unterhalb der Fahrbahndecke detektiert werden, so sind lichtempfindliche Flächen des Lichtdetektors auf beiden Seiten der Lichtlinienabbildung vorzusehen. Der Abstand zwischen der Lichtlinienabbildung und den lichtempfindlichen Flächen des Fotodetektors ist dabei durch die von der Fahrbahndecke aus gemessene Höhe bzw. Tiefe eines unbeachtlichen, d.h. gerade nicht mehr zu detektierenden Hindernisses bestimmt.

Wird nach einer weiteren Ausführungsform der Erfindung eine zweite Schutzzone von einem weiteren optischen Sender und Empfänger in Vorausrichtung aufgespannt, die gegenläufig zu der ersten Schutzzone verläuft, also in Vorausrichtung bezüglich der Fahrbahn ansteigt, so kann der Schutzbereich in Vorausrichtung des Gerätes sowohl in der Vorhaltedistanz als auch in der Höhe über der Fahrbahn unabhängig von der Höhe der Anbringung des ersten Senders oberhalb der Fahrbahndecke gemacht und in seinen Abmessungen nahezu beliebig durch entsprechende Einstellung der insgesamt zwei Sender und zwei Empfänger bemessen werden.

Die Erfindung ist anhand von in der Zeichnung dargestellten Ausführungsbeispielen nachfolgend näher beschrieben. Es zeigen jeweils in schematischer Darstellung:

Fig. 1 eine perspektivische Ansicht eines auf einem Fahrzeug montierten Überwachungssensors,

Fig. 2 eine Seitenansicht des Fahrzeugs mit Überwachungssensor in Fig. 1,

Fig. 3 eine Skizze des Strahlenverlaufs beim Überwachungssensor in Fig. 1 und 2,

Fig. 4 eine Seitenansicht eines auf einem Fahrzeug montierten Überwachungssensors gemäß einem weiteren Ausführungsbeispiel.

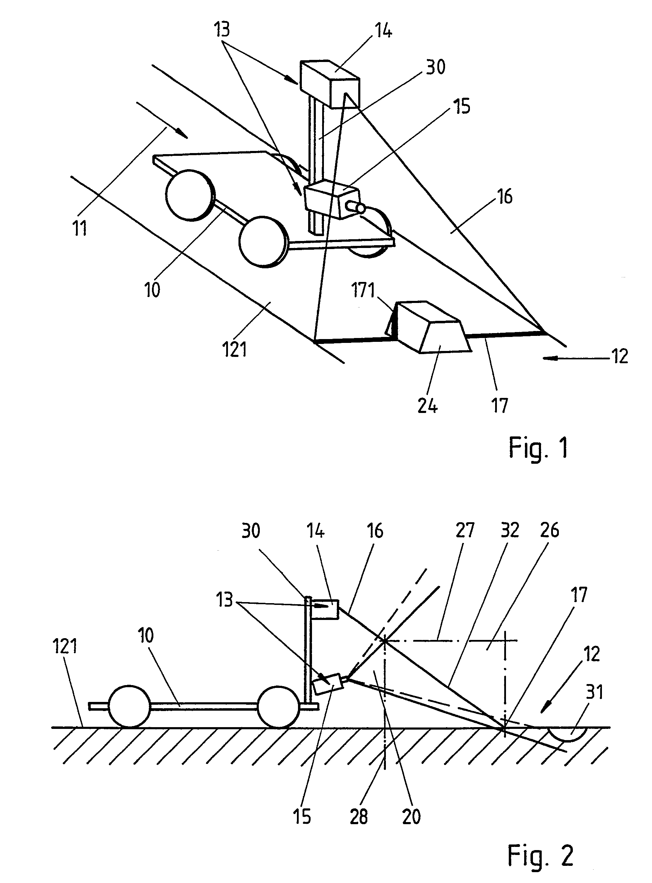

Das in Fig. 1 in perspektivischer Ansicht und in Fig. 2 in Seitenansicht skizzierte Fahrzeug 10 bewegt sich spurungebunden mit einer Geschwindigkeit in Fahrtrichtung (Pfeil 11) auf einer beliebigen Fahrbahn 12. Das Fahrzeug 10 trägt einen Überwachungssensor 13, der in der Fahrbahn 12 vor dem Fahrzeug 10 auftauchende Objekte erfaßt und entweder ein Warnsignal ausgibt oder ein Steuersignal zum Abbremsen des Fahrzeugs 10 oder zur Änderung der Fahrtrichtung 11 auslöst. Je nach Ausführung des Überwachungssensors werden dabei Hindernisse auf oder oberhalb der Fahrbahndecke 121 und/oder in der Fahrbahndecke, wie Löcher 31 (Fig. 2), detektiert. Der zweiteilige optische Überwachungssensor 13 besteht aus einem optischen Sender 14 und einem optischen Empfänger 15, die zusammen eine Schutzzone 32 in Vorausrichtung des Fahrzeugs 10 aufspannen. Sender 14 und Empfänger 15 sind an einer Vertikalsäule 30 des Fahrzeugs 10 befestigt, wobei der Sender 14 oberhalb des Empfängers 15 angeordnet ist. Der Sender 14 ist dabei so ausgerichtet, daß seine Senderichtung zur Fahrbahn 12 geneigt ist. In diese Senderichtung sendet der Sender 14 einen eindimensional aufgespreizten Sendestrahl derart aus, daß letzterer eine in Senderichtung sich erstreckende, die Schutzzone 32 überdeckende Lichtfläche 16 erzeugt, wie sie in Fig. 1 schematisch dargestellt ist. Durch die eindimensionale Aufspreizung des Sendestrahls verbreitet sich die Lichtfläche 16 vom Sender 14 aus mit zunehmender Entfernung und projiziert im Abstand vor dem Sender 14 auf die Fahrbahndecke 121 eine quer zur Fahrtrichtung 11 verlaufende Lichtlinie 17, die bei der ebenen Lichtfläche 16 eine Gerade bzw. ein Strich ist. Als optischer Sender 14 wird vorzugsweise ein Lasersender verwendet, der pulsierendes oder kontinuierliches Laserlicht aussendet, das zur Fremdlichtunterdrückung moduliert ist. Die seitliche Aufspreizung des Laserstrahls zur Erzeugung der dreieckförmigen Lichtfläche 16 wird durch eine Zylinderoptik erreicht.

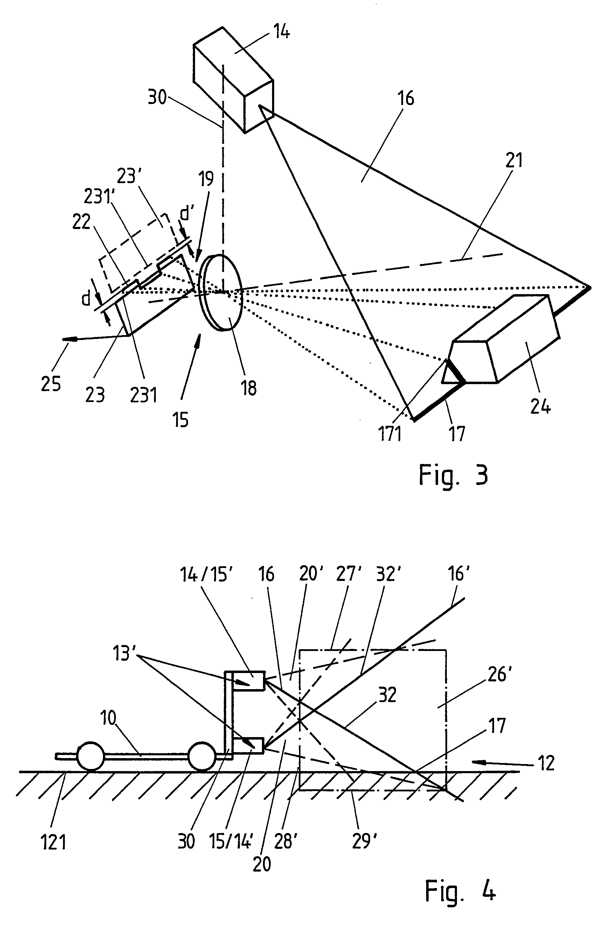

Der optische Empfänger 15 weist eine in Fig. 3 schematisch angedeutete Empfangsoptik 18 auf, die einen solchen räumlichen Empfangswinkel oder Auffaßbereich 20 besitzt, daß aus der Lichtfläche 16 die Schutzzone 32 ausgegrenzt und in der Bildebene 19 der Empfangsoptik 18 abgebildet wird. Zur Fremdlichtunterdrückung ist ein geeignetes Wellenlängen-Bandpaß-Filter vorgesehen. Die Empfangsoptik 18 ist so ausgerichtet, daß die auf die Fahrbahndecke 121 projizierte Lichtlinie 17 entweder gerade nicht mehr erfaßt wird, also gerade außerhalb der Schutzzone 32 liegt, wie dies in Fig. 2 strichliniert dargestellt ist, oder innerhalb der Schutzzone 32 liegt, die dann bis zu einem bestimmten Maß unterhalb der Fahrbahndecke 121 reicht, wie dies in Fig. 2 ausgezogen dargestellt ist. Im ersten Fall wird die auf die Fahrbahn 12 projizierte Lichtlinie 17 in der Bildebene 19 der Empfangsoptik 18 nicht abgebildet, im anderen Fall wird sie nahe dem oberen Rand der Bildebene 19 abgebildet. Die Abbildung der auf die Fahrbahn 12 projizierten Lichtlinie 17 in der Bildebene 19 der Empfangsoptik 18 ist in Fig. 3 mit 22 bezeichnet. Unterhalb der Lichtlinienabbildung 22 ist in der Bildebene 19 der Empfangsoptik 18 ein flächenhafter Lichtdetektor 23 angeordnet, der beispielsweise von einer großflächigen Fotodiode gebildet ist. Solange in die Lichtzone 16 kein Hindernis eindringt, erhält der Lichtdetektor 23 kein Licht, da die auf die Fahrbahndecke 121 projizierte Lichtlinie 22 überhaupt nicht oder oberhalb des Lichtdetektors 23 abgebildet wird (Fig. 3). Dringt jedoch bei Vorschub der Schutzzone 32 ein Hindernis 24 in die Lichtfläche 16 ein, wie dies in Fig. 1 und 3 schematisch dargestellt ist, so wird die auf die Fahrbahndecke 121 projizierte Lichtlinie 17 über die gesamte Breite des Hindernisses 24 unterbrochen, und das Hindernis 24 wird über seine gesamte Breite in der Höhe über der Fahrbahndecke 121 beleuchtet, in welcher es die Lichtflache 16 durchstößt. Dieser in der Höhe versetzte Abschnitt 171 der Lichtlinie 17 wird durch die Empfangsoptik 18 unterhalb der Lichtlinienabbildung 22 auf dem Lichtdetektor 23 abgebildet und schiebt sich mit der Vorwärtsbewegung des Fahrzeugs 10 über dessen lichtempfindliche Fläche bis das Hindernis 24 vollständig durch die Schutzzone 32 hindurchgedrungen ist. Der Lichtdetektor 23 erhält Licht und gibt ein entsprechendes elektrisches Signal am symbolisch dargestellten Ausgang 25 ab. Dieses Ausgangssignal signalisiert das Hindernis 24 in der Fahrbahn 12. Wird der Lichtdetektor 23 als positionsempfindliche Diode ausgebildet, so kann der Schwerpunkt der auf den Lichtdetektor 23 fallenden Lichtverteilung ermittelt werden und daraus eine Information über die Lage des Hindernisses 24 innerhalb der Schutzzone 32 gewonnen werden. Ist der Lichtdetektor 23 ein flächenhaftes Array aus einer Vielzahl von einzelnen Fotoempfängern, so können zusätzlich die Breitenausdehnung des Hindernisses 24 bestimmt und auch in die Schutzzone 32 gleichzeitig eindringende Hindernisse getrennt detektiert werden. Hindernisse, die nicht von der Fahrbahn 121 emporragen, sondern frei über der Fahrbahndecke 121 hängen und beim Vorschub der Schutzzone 32 in diese eintauchen, bewirken kein kontinuierliches Einschieben des Lichtlinienabschnitts 171 auf den Lichtdetektor 23, sondern ein sprunghaftes Auftauchen auf dem Lichtdetektor 23. Die Größe des Sprungs ist von dem Abstand des Hindernisses von der Fahrbahndecke abhängig.

Der Abstand d der der Lichtlinienabbildung 22 nächstliegenden Kante 231 des Lichtdetektors 23 von dieser ist maßgebend dafür, ab welcher Höhe oberhalb der Fahrbahn 12 Hindernisse erfaßt werden bzw. wie hoch ein auf der Fahrbahndecke 121 stehendes Hindernis 24 mindestens sein muß, damit es von dem Überwachungssensor 13 detektiert wird. Je größer der Abstand d gemacht wird, desto höher sind die Hindernisse, die von dem Überwachungssensor 13 gerade nicht mehr erfaßt werden. Nur diejenigen Hindernisse, die oberhalb dieser Höhe in die Lichtfläche 16 eindringen, werden detektiert. Sollen alle Hindernisse gleich welcher Höhe oberhalb der Fahrbahndecke 121 erfaßt werden, so ist der Abstand d so klein zu machen, daß die Lichtlinienabbildung 22 unmittelbar an der Kante 231 des Lichtdetektors 23 liegt, ohne letzteren zu beleuchten.

Wird zusätzlich ein weiterer Lichtdetektor 23'
im Abstand d' seiner Kante 231' von der Lichtlinienabbildung 22 oberhalb dieser in der Bildebene 19 der Empfangsoptik 18 angeordnet, so können auch in der Fahrbahndecke 121 vorhandene Vertiefungen oder Löcher 31 detektiert werden. Bei einem Loch 31 in der Fahrbahndecke 121 wird der den Lochbereich überstreichende Abschnitt der auf die Fahrbahndecke 121 projizierten Lichtlinie 17 nach unten versetzt und oberhalb der Lichtlinienabbildung 22 auf dem weiteren Lichtdetektor 23' abgebildet, so daß letzterer Licht erhält und ein entsprechendes Ausgangssignal ausgibt. Abschattungsprobleme des Auffaßbereichs 20 der Empfangsoptik 18 bei Löchern mit zu kleiner horizontaler und/oder zu großer vertikaler Ausdehnung sind zu berücksichtigen.

Der mit dem Überwachungssensor 13 vor dem Fahrzeug 10 aufgespannte Sicherheitsbereich 26 gegen in der Fahrbahn 12 auftretende Hindernisse ist in Fig. 2 durch strichpunktierte Umrahmung (Linien 27, 28) kenntlich gemacht. Er ist bestimmt durch die von dem Öffnungswinkel bzw. Auffaßbereich 20 der Empfangsoptik 18 aus der Lichtfläche 16 ausgegrenzten Schutzzone 32. Durch diesen Sicherheitsbereich 26 werden mit Ausnahme derjenigen Hindernisse, die oberhalb der strichpunktierten Linie 27 liegen oder erst hinter der strichpunktierten Linie 28 in die Fahrbahn 12 eintreten, alle Hindernisse vor dem Fahrzeug 10 erfaßt.

Um den in Fig. 2 mit 26 gekennzeichneten Sicherheitsbereich in der Höhe nach oben zu vergrößern, kann der Überwachungssensor 13' gemäß Fig. 4 modifiziert werden. Hierzu wird an der Vertikalsäule 30 neben dem Sender 14 ein weiterer optischer Empfänger 15' und neben dem Empfänger 15 ein weiterer optischer Sender 14' angebracht, die eine weitere Schutzzone 32' aufspannen. Die Senderichtung des zweiten optischen Senders 14 weist einen zur Senderichtung des ersten Senders 14 gegenläufigen Neigungswinkel auf, ist also von der Fahrbahndecke 121 weg, nach oben gerichtet. Die von dem zweiten Sender 14' erzeugte Lichtfläche ist mit 16' bezeichnet. Die optische Achse des zweiten Empfängers 15' ist mit einem Neigungswinkel nach unten zur Fahrbahndecke 121 hin gerichtet, im Gegensatz zu der optischen Achse des Empfängers 15, die von der Fahrbahn 12 weg nach oben weist. Auf diese Weise wird durch den Überwachungssensor 13' ein Sicherheitsbereich 26' aufgespannt, der in Fig. 4 durch strichpunktierte Umrahmung mit den Linien 27', 28' und 29' gekennzeichnet ist. Die Höhe der Sicherheitsbereichs 26' ist wesentlich größer als der des Sicherheitsbereichs 26 in Fig. 2 und auch von der Höhe der Anbringung des ersten Senders 14 am Fahrzeug 10 unabhängig.

Die Erfindung ist nicht auf die beschriebenen Ausführungsbeispiele beschränkt. So kann der Überwachungssensor 13' auch in Verbindung mit anderen spurungebundenen oder spurgebundenen mobilen Geräten verwendet werden, wie z. B. bei Robotern.

Durch Zusatzoptiken kann die in der Bildebene des Empfängers entworfene Abbildung der auf die Fahrbahndecke 121 projizierten Lichtlinie zu einem Punkt zusammengeschrumpft sein. In diesem Fall braucht der Lichtdetektor nicht flächenhaft zu sein. Hier genügt eine langgestreckte Diode oder eine Diodenzeile, die sich in diejenige Richtung in der Bildebene erstrecken muß, in welcher der Abbildungspunkt der Lichtlinie sich bei Fahrt des mobilen Geräts über die Bildebene verschiebt. Die lichtempfindlichen Flächen des Lichtdetektors müssen auch nicht unter- und oberhalb der Lichtlinienabbildung angeordnet werden. Eine seitliche Anordnung von der Lichtlinienabbildung ist dann erforderlich, wenn die Lichtlinienabbildung bei Vorwärtsbewegung des Fahrzeugs durch eine entsprechende Ausbildung der Empfangsoptik seitlich über die Bildebene wandert oder wenn bei einer stationären Anordnung des Überwachungssensors die Schutzzone vertikal aufgespannt ist und im Abstand vom Überwachungssensor von einer Wand begrenzt ist, auf welcher dann die projizierte, vertikal verlaufende Lichtlinie zu sehen ist. Ankommende und in die Schutzzone eindringende Objekte verschieben dann einen Teil der Lichtlinienabbildung seitlich auf die lichtempfindlichen Flächen des Lichtdetektors.

Der Einsatz des Überwachungssensors ist nicht auf mobile Geräte als sog. Kollisionswarnsensoren beschränkt. Der Überwachungssensor kann unter Ausnutzung aller seiner Vorzüge auch bei stationären Anlagen verwendet werden, so z. B. als Schutzsensor gegen Eindringen in Gefahrenbereiche, wie laufende Maschinen, Hochspannungsfelder etc., oder als Einbruchssensor zur Sicherung von Gebäuden und Grundstücken.

**Ansprüche**

1. Optischer Überwachungssensor zum Detektieren von in eine vorgegebene Schutzzone eindringenden Objekten mit einem optischen Sender und einem optischen Empfänger, dadurch gekennzeichnet, daß der optische Sender (14; 14') längs der Schutzzone (32; 32') einen eindimensional aufgespreizten Sendestrahl aussendet, der eine die Schutzzone (32; 32') überdeckende Lichtfläche (16; 16') aufspannt, und daß der optische Empfänger (15; 15') einen die Schutzzone (32; 32') aus der Lichtfläche (16; 16') ausgrenzenden räumlichen Auffaßbereich (20) und einen Lichtdetektor (23) aufweist, der bei Empfang von Licht ein Ausgangssignal zum Auslösen eines Warn- oder Steuerprozesses generiert.

2. Sensor nach Anspruch 1, dadurch gekennzeichnet, daß Sender (14; 14') und Empfänger (15; 15') an einem gemeinsamen Aufstellort (10) mit Abstand voneinander angebracht sind.

3. Sensor nach Anspruch 1 oder 2, dadurch gekennzeichnet, daß der Sender (14; 14') kontinuierliches oder gepulstes Licht aussendet, das vorzugsweise moduliert oder gefiltert ist.

4. Sensor nach einem der Ansprüche 1 bis 3, dadurch gekennzeichnet, daß der Sender (14; 14') ein Lasersender ist und daß die Aufspreizung des Laserstrahls mittels einer Zylinderoptik erfolgt.

5. Sensor nach einem der Ansprüche 1 bis 4, dadurch gekennzeichnet, daß der Lichtdetektor (23; 23') von einer großflächigen Fotodiode gebildet ist.

6. Sensor nach einem der Ansprüche 1 bis 4, dadurch gekennzeichnet, daß der Lichtdetektor (23; 23') von einer positionsempfindlichen Fotodiode gebildet ist.

7. Sensor nach einem der Ansprüche 1 bis 4, dadurch gekennzeichnet, daß der Lichtdetektor (23; 23') von einem flächenhaften Array aus einer Vielzahl von Fotoempfängern gebildet ist.

8. Sensor nach einem der Ansprüche 2 bis 7, gekennzeichnet durch seine Befestigung an einem mobilen Gerät, wie Roboter, Fahrzeug oder sonstigem leitdrahtlosen Transportmittel, und durch eine Ausrichtung von Sender (14; 14') und Empfänger (15; 15') derart, daß die Schutzzone (32; 32') in Vorausrichtung des mobilen Geräts (10) liegt.

9. Sensor nach Anspruch 8, dadurch gekennzeichnet, daß zur Detektion von in der Fahrbahn (12) befindlichen Hindernissen (24) die Schutzzone (32) zur Fahrbahndecke (121) hin geneigt ist.

10. Sensor nach Anspruch 9, dadurch gekennzeichnet, daß der optische Sender (14) im Vertikalabstand vom optischen Empfänger (15) mit zur Fahrbahndecke (121) geneigter Senderichtung angeordnet ist.

11. Sensor nach Anspruch 9 oder 10, dadurch gekennzeichnet, daß zur Detektion von oberhalb der Fahrbahndecke (121) befindlichen Hindernissen der Auffaßbereich (20) des optischen Empfängers (15) so eingestellt ist, daß die Schutzzone (32) geringfügig oberhalb der Fahrbahndecke (121) endet.

12. Sensor nach Anspruch 9 oder 10, dadurch gekennzeichnet, daß zur Detektion von oberhalb und/oder in der Fahrbahndecke befindlichen Hindernissen (24, 31) der Auffaßbereich (20) des optischen Empfängers (15) so eingestellt ist, daß die Schutzzone (32) die Fahrbahn (12) durchstoßend um ein gewisses Maß unterhalb der Fahrbahndecke (121) endet, und daß der Lichtdetektor (23; 23') im Empfänger (15) so angeordnet ist, daß er von einer von dem lichtflächenerzeugenden Sendestrahl auf die Fahrbahndecke (121) projizierten Lichtlinie (17) nicht beleuchtet wird.

13. Sensor nach Anspruch 12, dadurch gekennzeichnet, daß der Lichtdetektor (23; 23') in der Bildebene (19) einer Empfangsoptik (18) des Empfängers (14) mit Abstand (d, d') von der von der Empfangsoptik (18) in der Bildebene (19) entworfenen Abbildung (22) der auf die Fahrbahndecke (121) projizierten Lichtlinie (17) angeordnet ist.

14. Sensor nach Anspruch 13, dadurch gekennzeichnet, daß der Abstand (d, d') zwischen der Lichtlinienabbildung (22) und dem Fotodetektor (23, 23') durch die von der Fahrbahndecke (121) aus gemessene Höhe bzw. Tiefe eines unbeachtlichen, d.h. gerade nicht mehr zu detektierenden Hindernisses bestimmt ist.

15. Sensor nach einem der Ansprüche 9 bis 14, gekennzeichnet durch eine von einem weiteren optischen Sender (14') und Empfänger (15') aufgespannte Schutzzone (32'), die gegenläufig zur ersten Schutzzone (32) in Vorausrichtung des Fahrzeugs (10) ansteigt.

16. Sensor nach Anspruch 15, dadurch gekennzeichnet, daß der zweite optische Sender (14') im Vertikalabstand vom zweiten optischen Empfänger (15') mit von der Fahrbahndecke (121) gesehen in Fahrtrichtung (11) des Fahrzeugs (10) ansteigender Senderichtung angeordnet ist.

Fig. 1

Fig. 2

KAE 6-88

Fig. 3

Fig. 4

KAE   6-88